(19) Europäisches Patentamt
European Patent Office
Office européen des brevets

(11) **EP 1 868 158 A2**

(12) **EUROPEAN PATENT APPLICATION**

(43) Date of publication:
**19.12.2007 Bulletin 2007/51**

(51) Int Cl.:
***G06T 7/00*** *(2006.01)*     ***G06K 9/00*** *(2006.01)*

(21) Application number: **06016957.0**

(22) Date of filing: **14.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.06.2006 JP 2006165507**

(71) Applicant: **KABUSHIKI KAISHA TOSHIBA Tokyo (JP)**

(72) Inventors:
• **Takizawa, Kei**
  **c/i Intellectual Property Division**
  **Minato-ku**
  **Tokyo 105-8001 (JP)**
• **Hasebe, Mitsutake**
  **c/o Intellectual Property Division**
  **Minato-ku**
  **Tokyo 105-8001 (JP)**

(74) Representative: **HOFFMANN EITLE**
**Patent- und Rechtsanwälte**
**Arabellastrasse 4**
**81925 München (DE)**

(54) **Face authentication apparatus, face authentication method, and entrance and exit management apparatus**

(57) A face authentication unit includes an acquisition unit (101, 301, 401, 501) configured to acquire an image including at least the face of a moving person, a face detection unit (105, 106, 305, 306, 405, 406, 502, 503) configured to detect a face region candidate of the person from the image acquired by the acquisition unit, and to detect a face region from the detected face region candidate, a face recognition unit (109, 309, 409, 507) configured to recognize an image of the face region detected by the face detection unit and registered face information which is stored in advance, and an authentication unit (117, 314, 416) configured to authenticate the person based on the recognition result of the face recognition unit.

F I G. 1

**Description**

The invention relates to a face authentication apparatus and face authentication method, which set a walker as an object to be authenticated, and recognize a face image acquired from this individual with registered face information which is stored in advance, so as to determine whether or not the walker is a pre-registered person.

The invention also relates to an entrance and exit management apparatus which manages entrance to or exit from a room, facility, or the like that requires security using the face authentication apparatus and face authentication method.

For example, an entrance and exit management apparatus using a face authentication apparatus has a camera. A person as an object to be authenticated stops in front of the camera and turns his or her face to the lens of the camera. The camera captures (acquires) the face image of that person. The face authentication apparatus recognizes feature information of the face unique to the person of interest obtained from the captured face image with registered face information which is stored in advance to determine if the person of interest is a pre-registered person. Based on the determination result indicating that the person of interest is a pre-registered person, the entrance and exit management apparatus opens a door of an entrance and exit target zone (a room, facility, or the like) (for example, see Jpn. Pat. Appln. KOKAI Publication No. 2001-266152).

As described above, the entrance and exit management apparatus (face authentication apparatus) of this type captures the face of a person as an object to be authenticated when he or she stops in front of the camera. For this reason, when an object to be authenticated is a walker (moving person), it is difficult to complete person authentication until the walker comes close to a door.

As a known example of a method of capturing a face image of a walker, for example, techniques disclosed in Jpn. Pat. Appln. KOKAI Publication Nos. 2000-331207 and 2002-140699 are available.

The technique disclosed in Jpn. Pat. Appln. KOKAI Publication No. 2000-331207 pays attention on the fact that since a person tends to slightly bend down his or her head when he or she walks, an full-faced image is easily acquired by capturing the face from below. More specifically, cameras are set rather upward from the right and left positions of a passage at a level lower than the face.

In the technique disclosed in Jpn. Pat. Appln. KOKAI Publication No. 2002-140699, a camera is set to capture the face of a walker when a door is opened, i.e., to acquire an image at the moment of opening of the door. This technique pays attention to the fact that a person faces front when he or she passes through the door.

However, in the conventional entrance and exit management apparatus (face authentication apparatus), authentication must be done after a person temporarily stops in front of the lens of the camera, resulting in inconvenience for the user.

As a problem of the conventional method of capturing the face image of a walker, poor authentication performance due to a non-full-faced image is known.

Jpn. Pat. Appln. KOKAI Publication Nos. 2000-331207 and 2002-140699 propose the image capturing method of capturing a full-faced image of a walker by utilizing characteristics of a walker in that a person tends to slightly bend down his or her head or a person tends to face front when he or she passes through a door.

However, these methods assume a limited situation, and a full-faced image is unlikely to be captured in general walking. If the walking speed of a walker is high, the number of acquired images is insufficient even if a full-faced image can be captured, resulting in poor face authentication performance.

It is an object of the present invention to provide a face authentication apparatus, face authentication method, and entrance and exit management apparatus with excellent face authentication performance.

A face authentication apparatus according to an example of the invention comprises: an acquisition unit configured to acquire an image including at least a face of a moving person; a face detection unit configured to detect a face region candidate of the person from the image acquired by the acquisition unit, and to detect a face region from the detected face region candidate; a face recognition unit configured to recognize an image of the face region detected by the face detection unit and registered face information which is stored in advance; and an authentication unit configured to authenticate the person based on the recognition result of the face recognition unit.

A face authentication method according to an example of the invention comprises: acquiring an image including at least a face of a moving person; detecting a face region candidate of the person from the acquired image, and detecting a face region from the detected face region candidate; recognizing an image of the detected face region and registered face information which is stored in advance; and authenticating the person based on the recognition result.

An entrance and exit management apparatus according to the invention comprises: an acquisition unit configured to acquire an image including at least a face of a moving person; a face detection unit configured to detect a face region candidate of the person from the image acquired by the acquisition unit, and to detect a face region from the detected face region candidate; a face recognition unit configured to recognize an image of the face region detected by the face detection unit and registered face information which is stored in advance; an authentication unit configured to authenticate the person based on the recognition result of the face recognition unit; and a gate control unit configured to control to open or close an entrance and exit gate based on the authentication result of the authentication unit.

The invention can be more fully understood from the following detailed description when taken in conjunction with the accompanying drawings, in which:

FIG. 1 is a schematic block diagram showing the arrangement of an entrance and exit management apparatus to which a face authentication apparatus according to the first embodiment of the invention is applied;

FIGS. 2A and 2B are views for explaining a setting example of the face authentication apparatus;

FIGS. 3A to 3C show display screen examples in a face authentication display unit;

FIG. 4 shows a display screen example in a face search display unit;

FIG. 5 is a view for explaining head detection processing;

FIG. 6 is a view for explaining head trace processing;

FIG. 7 is a view for explaining flow line extraction processing;

FIG. 8 is a view for explaining flow line comparison processing;

FIG. 9 is a flowchart for explaining the flow of processing of a gate control unit;

FIG. 10 is a flowchart for explaining the flow of other processing of a gate control unit;

FIG. 11 is a flowchart for explaining the flow of processing of a display authentication control unit;

FIG. 12 is a flowchart for explaining the flow of face candidate region detection processing;

FIG. 13 is a flowchart for explaining the flow of another face candidate region detection processing;

FIG. 14 is a flowchart for explaining the flow of face recognition processing;

FIG. 15 is a block diagram showing only principal part of the arrangement of an entrance and exit management apparatus to which a face authentication apparatus according to the second embodiment of the invention is applied;

FIG. 16 is a schematic block diagram showing the arrangement of an entrance and exit management apparatus to which a face authentication apparatus according to the third embodiment of the invention is applied;

FIG. 17 is a flowchart for explaining the flow of processing of a display authentication control unit;

FIG. 18 is a schematic block diagram showing the arrangement of an entrance and exit management apparatus to which a face authentication apparatus according to the fourth embodiment of the invention is applied;

FIG. 19 is an explanatory view associated with a passer confirmation region;

FIGS. 20A and 20B are views for explaining correspondence between the face recognition result and flow line;

FIG. 21 is a flowchart for explaining the flow of interchange determination processing;

FIGS. 22A to 22D are views associated with practical examples of interchange determination;

FIG. 23 is a flowchart for explaining the flow of processing of a display authentication control unit;

FIG. 24 is a schematic block diagram showing the arrangement of an entrance and exit management apparatus to which a face authentication apparatus according to the fifth embodiment of the invention is applied; and

FIG. 25 is a flowchart for explaining the flow of the overall processing.

Embodiments of the invention will be described hereinafter with reference to the accompanying drawings.

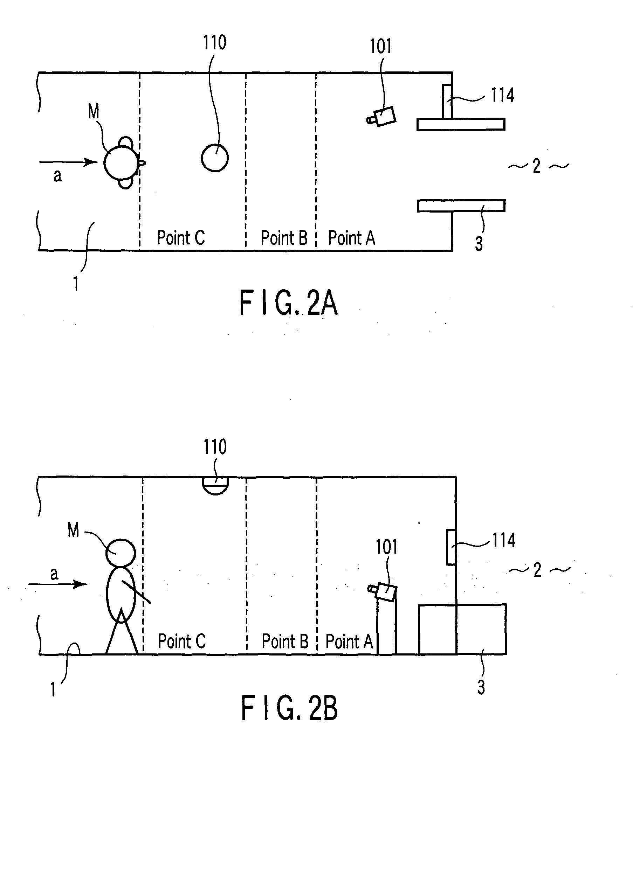

An overview of the invention will be briefly explained. In the invention, for example, as shown in FIGS. 2A and 2B, the face of a walker M who walks along a path 1 in the direction of an arrow a in FIGS. 2A and 2B toward a gate device (entrance and exit gate) 3 such as a door, gate, or the like provided to an entrance and exit target zone (a room, facility, or the like) 2 is captured by a camera. More specifically, while the walker M exists somewhere between a point C and a point A on the path 1, an image including at least a face of the walker M is captured by the camera, and whether or not the walker M is a pre-registered person is determined based on the acquired image while the walker M walks from the point A to the gate device 3. If it is determined that the walker M is a pre-registered person, he or she is permitted to pass through the gate device 3. Note that a range bounded from the point C to the point A on the path 1 will be referred to as an image capturing target zone for capturing the face of the walker M, as shown in FIGS. 2A and 2B.

The first embodiment of the invention will be described below.

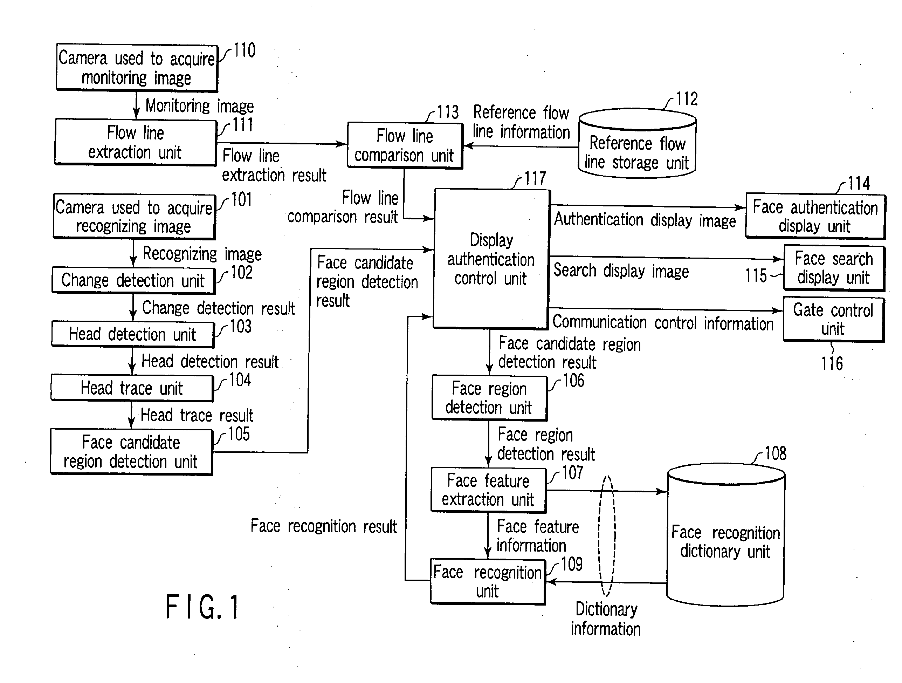

FIG. 1 schematically shows the arrangement of an entrance and exit management apparatus to which a face authentication apparatus according to the first embodiment is applied. This entrance and exit management apparatus comprises a video camera (to be simply referred to as a camera hereafter) 101 which is used to acquire a recognition image, i.e., which serves as an acquisition unit for acquiring an image including at least the face of the walker M, a change detection unit 102, a head detection unit 103, a head trace unit 104, a face candidate region detection unit 105, a face region detection unit 106, a face feature extraction unit 107, a face recognition dictionary unit 108, a face recognition unit 109, a video camera (to be simply referred to as a camera hereafter) 110 which is used to acquire a monitoring image, i.e., which captures an image of the path 1 including the walker M, a flow line extraction unit 111, a reference flow line storage unit 112, a flow line comparison unit 113, a face authentication display unit 114, a face search display unit 115, a gate control unit 116, and a display authentication control unit 117 which performs the overall control.

The respective building components will be described in detail below.

The face authentication display unit 114 is arranged near the gate device 3, as shown in FIGS. 2A and 2B, and displays current face authentication status for the walker M. For example, the unit 114 comprises a liquid crystal display, CRT display, or the like. The setting height of the face authentication display unit 114 is about the average value of heights of walkers.

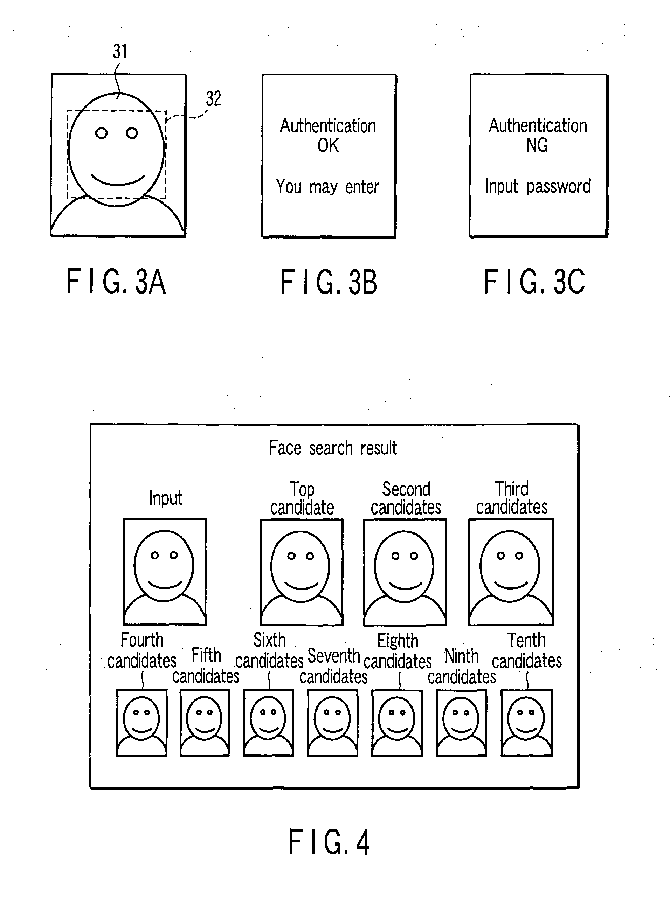

The face authentication display unit 114 displays, as shown in, e.g., FIG. 3A, an entire image 31 obtained from the camera 101 used to acquire a recognition image, and a detection result (face candidate region) 32 of the face candidate region obtained from the face candidate region detection unit 105. When the authentication processing is complete, and it is determined that the walker M is a registered person, a message "authentication OK you may enter" indicating that his or her passage (entrance) is permitted is displayed for the walker M, as shown in FIG. 3B. Otherwise, a message "authentication NG input password" indicating that passage (entrance) of the walker M is denied is displayed for the walker M, as shown in FIG. 3C.

The face search display unit 115 displays the order of face search results of a plurality of (N) persons, and comprises, e.g., a liquid crystal display, CRT display, or the like. As the display contents, for example, face images of the face search results of top 10 persons are displayed, as shown in FIG. 4.

The camera 101 used to acquire a recognition image captures an image which includes at least the face of the walker M, and comprises a television camera using an image sensing element such as a CCD sensor or the like. The camera 101 is set at a position between the point A and gate device 3 on the side portion of the path 1, as shown in FIG. 2A. The setting level of the camera 101 is substantially the same as that of the face authentication display unit 114 but it is slightly lower than the face authentication display unit 114 so as not to conceal the face authentication unit 114 by the camera 101. In case of the overhead view, the camera 101 and the face authentication display unit 114 are set to align when viewed from the walker M in the image capturing target zone, as shown in FIG. 2A.

By setting the camera 101 in this way, when the walker M looks at the face authentication display unit 114, an image including a full face can be acquired. The acquired image is sent to the change detection unit 102 as digital density image data having 512 pixels in the horizontal direction and 512 pixels in the vertical direction.

The change detection unit 102 detects a changed region from the image obtained by the camera 101. In detection processing of a change region, for example, a change region is detected from the difference from a background image like in a method described in reference (Nakai, "Detection method for moving object using post-confirmation", IPSJ Transaction, 94-CV90, pp. 1 - 8, 1994). With this method, an image when no change occurs is provided as a background image, and a changed region is detected as a change region based on the difference between the background image and the current input image.

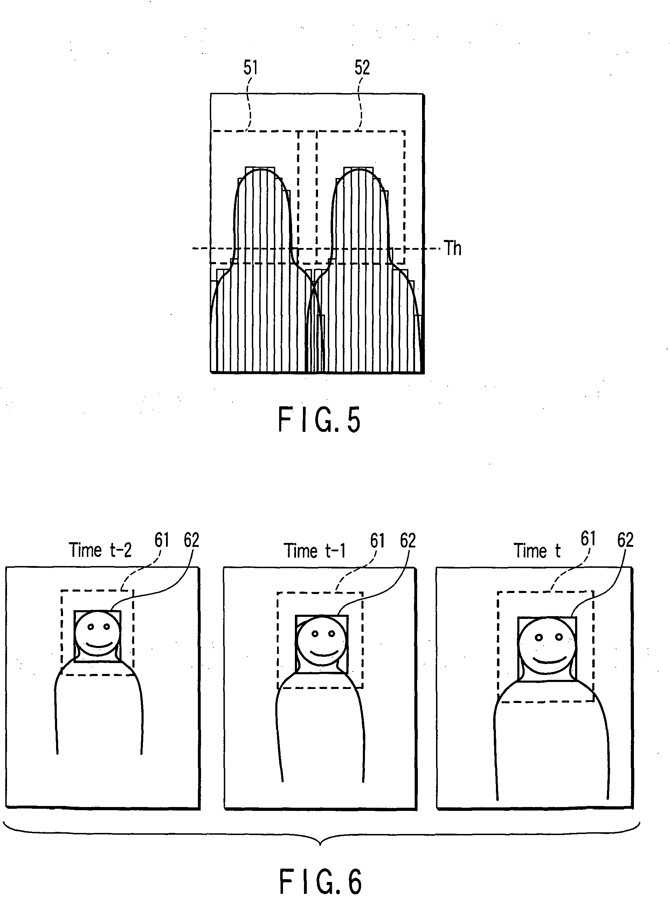

The head detection unit 103 detects a head region including a face from the change region obtained by the change detection unit 102. The head region is detected by, e.g., processing shown in FIG. 5. A projection is taken in the vertical direction of the change region image, and a region where the projection value exceeds a given threshold Th is selected as a target region. The target region is searched for a maximal point, and a head region is determined with reference to the found maximum point. In FIG. 5, reference numerals 51 and 52 denote detected head regions.

The head trace unit 104 associates a head region previously detected by the head detection unit 103 with that detected from the currently input image. This association is implemented by associating, e.g., a head region detected from the currently input image (time t) with a head region detected from the immediately preceding input image (time t-1) which has a size and position close to those of the former head region. In FIG. 6, reference numeral 61 denotes a detected head region, and reference numeral 62 denotes a face candidate region.

The face candidate region detection unit 105 detects a candidate region where the face exists from the head region obtained by the head detection unit 103 or head trace unit 104. This unit 105 detects a face candidate region using face-like features, and executes this processing for the purpose of deleting head regions which are detected by the processes of the change detection unit 102 to the head trace unit 104 and do not include any faces. Practical detection processing of a face candidate region uses a method described in reference (Mita, Kaneko, & Hori, "Proposal of spatial difference probability template suitable for authentication of image including slight difference", Lecture Papers of 9th Symposium on Sensing via Image Information, SSII03, 2003). In this method, a detection dictionary pattern is generated from face learning patterns in advance, and a pattern with a high similarity to the dictionary pattern is retrieved from an input image.

The face region detection unit 106 extracts a face pattern from the face candidate region which is detected and input by the face candidate region detection unit 105. A face region can be detected with high precision using, e.g., a method described in reference (Fukui & Yamaguchi, "Face feature point extraction by combination of shape extraction and pattern recognition", Journal of IEICE, (D), vol. J80-D-H, No. 8, pp. 2170 - 2177, 1997) or the like.

The face feature extraction unit 107 extracts a face region into a given size and shape based on the position of a detected component, and uses its density information as a feature amount. In this case, the density values of a region of m pixels x n pixels are used as information intact, and (m x n)-dimensional information is used as a feature vector. A correlation matrix of the feature vector is calculated from these data, and an orthonormal vector is calculated by K-L expansion of that matrix, thus calculating a subspace. In the method of calculating the subspace, a correlation matrix (or covariance matrix) of the feature vector is calculated, and an orthonormal vector (eigenvector) is calculated by K-L expansion of that matrix, thus calculating the subspace. The subspace is expressed using a set of eigenvectors by selecting k eigenvectors corresponding to eigenvalues in descending order of eigenvalue. In this embodiment, a correlation matrix $Cd$ is calculated from the feature vector, and an eigenvector matrix $\Phi$ is calculated by orthogonalizing with the correlation matrix:

$$Cd = \Phi d \Lambda d \Phi dT$$

This subspace is utilized as face feature information used to identify a person. This information can be registered in advance as a dictionary. As will be described later, the subspace itself may be utilized as face feature information used to perform identification. Therefore, the calculation result of the subspace is output to the face recognition dictionary unit 108 and face recognition unit 109.

The face recognition dictionary unit 108 holds the face feature information obtained from the face feature extraction unit 107 as face information, and allows to calculation of similarity with a person M.

The face recognition unit 109 calculates similarity between face feature information of the walker M extracted from the image acquired by the camera 101 by the face feature extraction unit 107 and face feature information (registered face information) stored in the face recognition dictionary unit 108. When the calculated similarity is equal to or higher than a determination threshold which is set in advance, the unit 109 determines that the walker M is a pre-registered person; otherwise, the unit 109 determines that the walker M is not a pre-registered person. This face recognition processing can be implemented by using a mutual subspace method described in reference (Yamaguchi, Fukui, & Maeda, "Face recognition system using moving image", IEICE Transactions PRMU97-50, pp. 17 - 23, 1997-06).

The camera 110 used to acquire a monitoring image acquires an image from which the flow line of the walking walker M in the image capture target zone is to be extracted, and comprises, e.g., a television camera using an image sensing element such as a CCD sensor or the like. The camera 110 is set at a position to look down from the ceiling so that its field angle can cover the image capture target zone of the path 1, as shown in FIGS. 2A and 2B. The acquired image is sent to the flow line extraction unit 111 as digital density image data of 640 pixels in the horizontal direction and 480 pixels in the vertical direction.

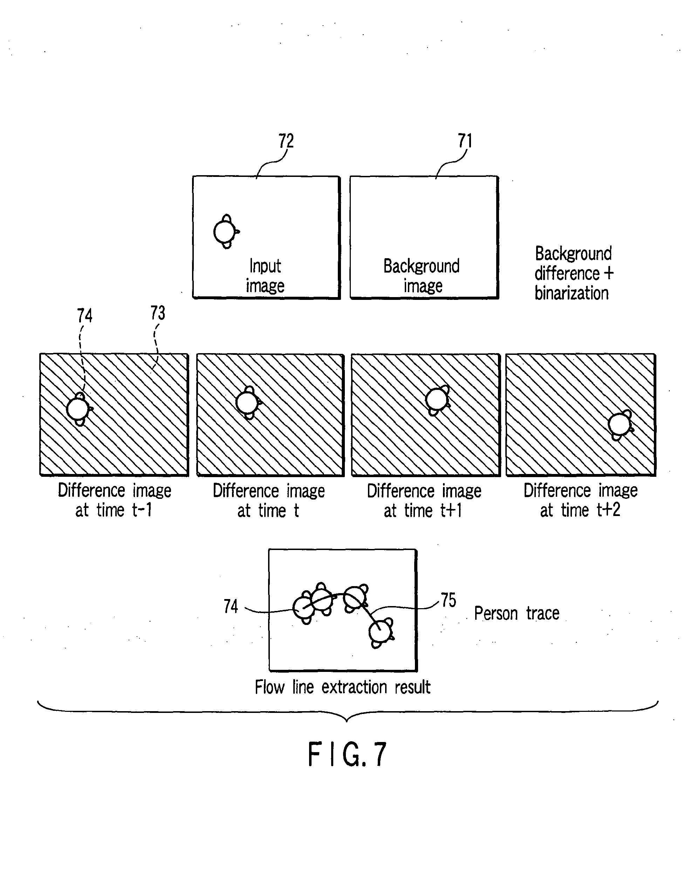

The flow line extraction unit 111 extracts the flow line of the walker M from the image acquired by the camera 110. The flow line is extracted by, e.g., processing shown in FIG. 7. Initially, luminance value differences between pixels of a background image 71 which is statistically estimated from previously input images, and an input image 72 which is newly input, and a binary image is calculated from this difference image 73 by threshold processing, thus detecting a person region 74. Subsequently, person regions 74 which are detected from respective image frames are associated with each other, thus obtaining a flow line 75 for each person.

The reference flow line storage unit 112 stores a reference flow line which is set in advance, and allows calculation of distance with the flow line of the walker M.

The flow line comparison unit 113 calculates distance between the reference flow line stored in the reference flow line storage unit 112 and the flow line of the walker M obtained by the flow line extraction unit 111. The distance is calculated, for example, by:

$$D = \sum_{i=1}^{i=n} dx_i$$

$$dx_k = \left| lx_k - Lx_k \right|$$

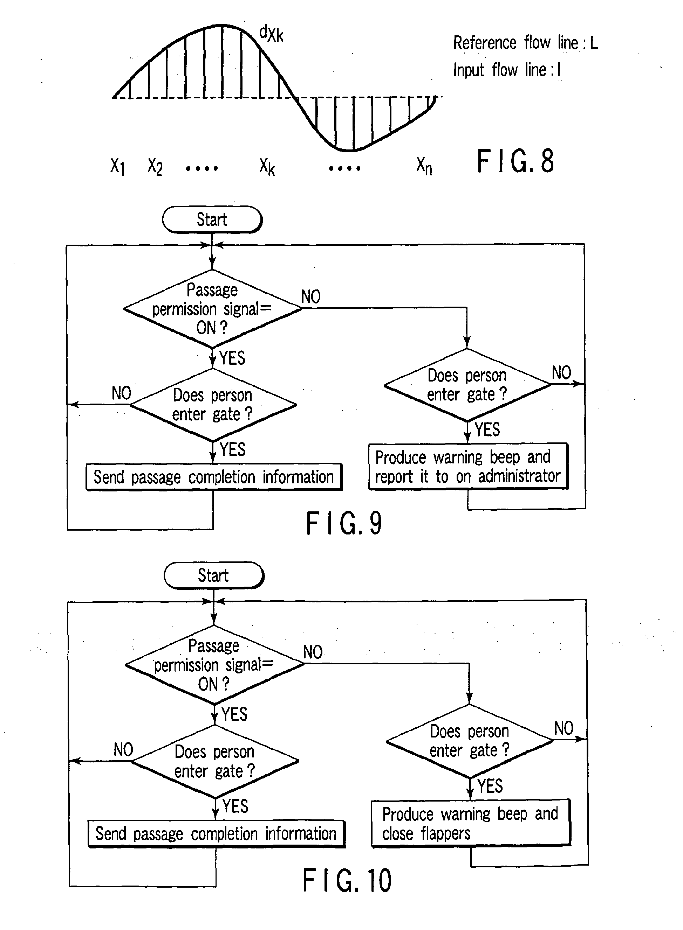

These equations express similarity D by the cumulative sum of distances $d_{xk}$ between an input flow line $L_{xk}$ and reference flow line $l_{xk}$ at sampling points $X_1$ to $X_n$, as shown in FIG. 8.

The gate control unit 116 sends a control signal which instructs to open or close to the gate device 3 shown in FIGS. 2A and 2B. More specifically, the gate control unit 116 performs control, as shown in FIG. 9. That is, when a person tries to enter the gate device 3 although a passage permission signal is OFF, the gate control unit 116 produces a warning beep and report it to an administrator. Or it is possible to close flappers provided to the gate device 3 to stop him or her, as shown in FIG. 10.

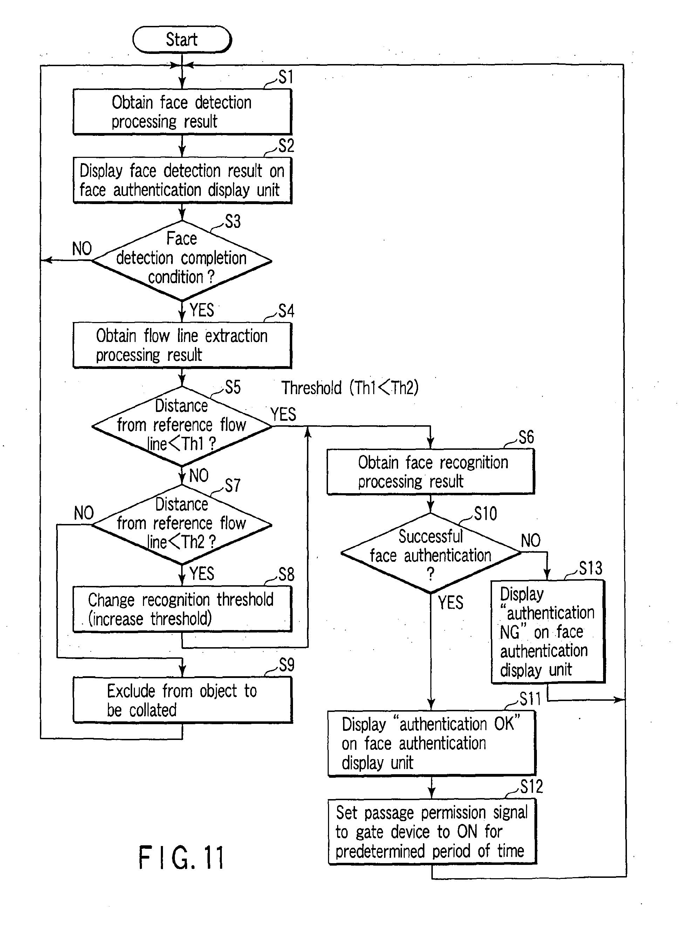

The display authentication control unit 117 controls the overall apparatus, and the flow of processing is shown in the flowchart of FIG. 11. The flowchart of FIG. 11 will be described below.

If the walker M exists in the image capture target zone, face region detection processing is executed (step S1), and the detection result is displayed on the face authentication display unit 114 (step S2). It is then checked if the face region detection completion condition is met (step S3). If the face region detection completion condition is not met, the flow returns to step S1 to repeat the same processing.

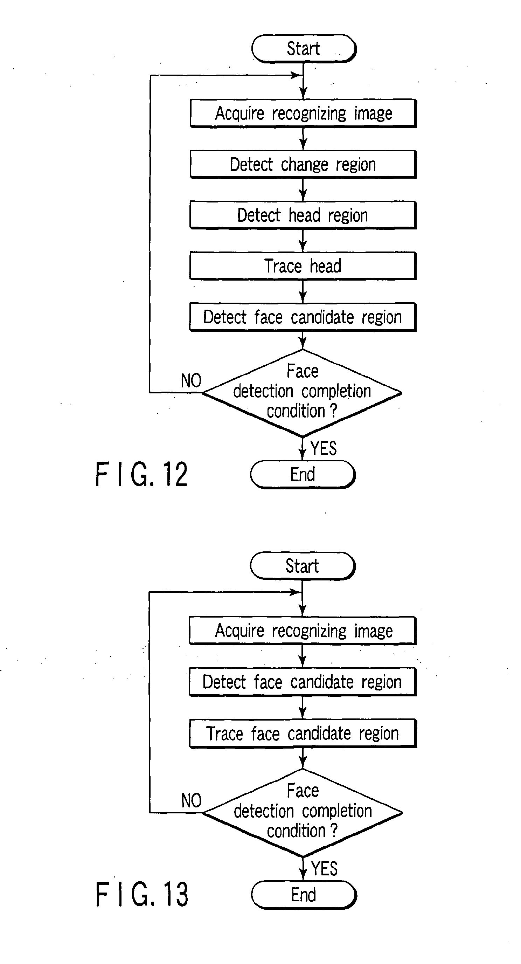

Note that the face region detection processing indicates a series of processes from the camera 101 to the face candidate region detection unit 105, and FIG. 12 shows its flow of processing. Note that the face region detection processing may be processed in the order shown in FIG. 13. In this processing, after strict detection is made using face-like features, a face candidate region is detected using motion features.

Also, the face detection completion condition includes a case wherein a required number of face candidate regions are acquired. In addition, the face detection completion condition includes a case wherein the image sizes of the detected face candidate regions become equal to or larger than a predetermined value, a case wherein head trace processing is complete, and the like.

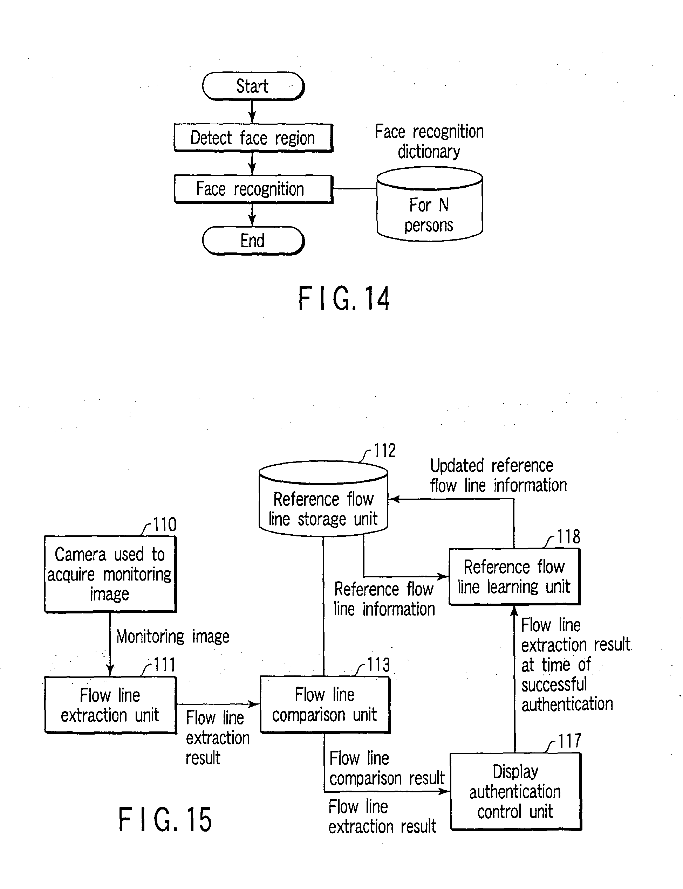

If the face detection completion condition is met, the flow line extraction result of the walker M is acquired from the flow line extraction unit 111 (step S4). Next, the acquired flow line extraction result is compared with the reference flow line which is registered in advance in the reference flow line storage unit 112 (step S5), and if the calculated distance is less than the threshold Th1, face recognition processing is executed (step S6). Note that the face recognition processing indicates a series of processes from the face region detection unit 106 to the face recognition unit 109, and FIG. 14 shows its flow of processing.

On the other hand, if the distance between the flow line of the walker M and the reference flow line is equal to or larger than the threshold Th1, normal face recognition processing is skipped. More specifically, if the distance is equal to or larger than the threshold Th1 and is less than a threshold Th2 (Th2 > Th1) (step S7), the determination threshold in the face recognition unit 109 is changed to be higher (to set a higher security level) (step S8), and face recognition processing is executed (step S6). If the distance is equal to or larger than the threshold Th2, the walker M is excluded from the object to be recognized (step S9), and the flow returns to step S1.

It is checked based on the result of the face recognition processing if authentication has succeeded (step S10). If authentication has succeeded (if it is determined that the walker M is a pre-registered person), a message indicating authentication OK is displayed on the face authentication display unit 112 (step S11), and a passage permission signal to the gate device 3 is set ON for a predetermined period of time (step S12). The flow then returns to step S1. As a result, the walker M can pass through the gate device 3.

As a result of checking in step S10, if authentication has failed (if it is determined that the walker M is not a pre-registered person), a message indicating authentication NG is displayed on the face authentication display unit 112 (step S13), and the flow returns to step S1.

As described above, according to the first embodiment, it is checked based on the flow line extraction result of the walker M if the walker M is suited to an object to be captured, and the face recognition processing is executed based on this checking result, thus greatly improving the face authentication performance.

The second embodiment will be described below.

FIG. 15 schematically shows the arrangement of an entrance and exit management apparatus to which the face authentication apparatus according to the second embodiment is applied. The second embodiment is different from the aforementioned first embodiment in that a reference flow line learning unit 118 is added, and other components are the same as those in the first embodiment (FIG. 1). Only the different component and its associated components are illustrated, and other components are not shown.

The reference flow line learning unit 118 updates a reference flow line using the flow line extraction result at the time of successful authentication, and the reference flow line stored in the reference flow line storage unit 112. For this purpose, the flow line comparison unit 113 outputs the flow line comparison result and flow line extraction result to the display authentication control unit 117, which outputs the flow line extraction result at the time of successful authentication to the reference flow line learning unit 118. As the update method of the reference flow line, the average values between the input flow line $L_{Xk}$ and reference flow line $I_{Xk}$ at sampling points $X_1$ to $X_n$ are adapted as a new reference flow line after update, and the new reference flow line is registered (stored) in the reference flow line storage unit 112.

As described above, according to the second embodiment, the reference flow line is updated using the flow line extraction result at the time of previous successful authentication, and comparison with the reference flow line suited to face authentication is made, thus allowing determination of an object to be captured with high reliability.

The third embodiment will be described below.

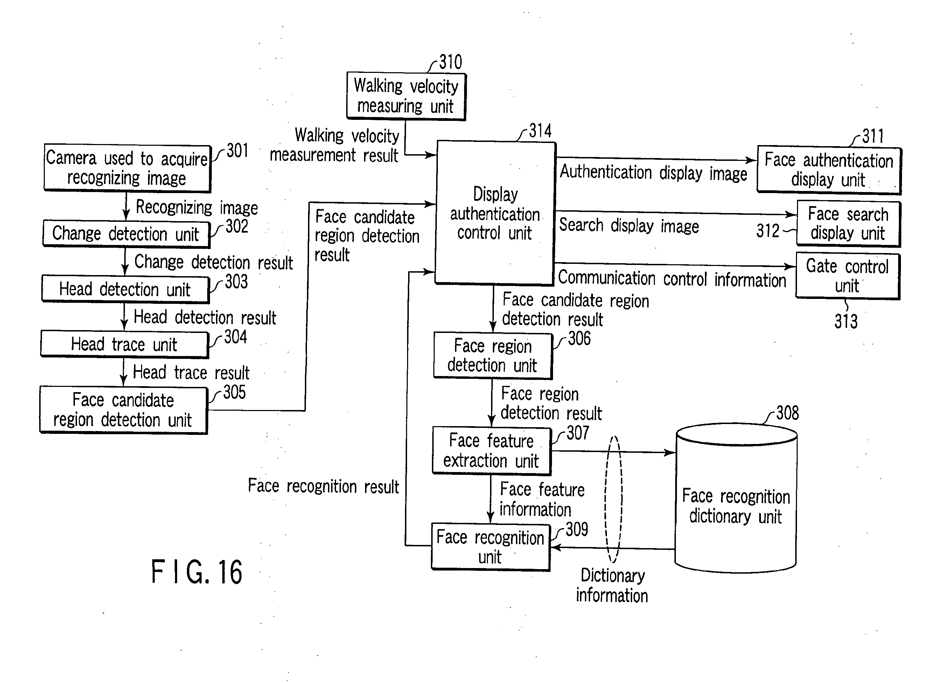

FIG. 16 schematically shows the arrangement of an entrance and exit management apparatus to which the face authentication apparatus according to the third embodiment is applied. This entrance and exit management apparatus comprises a camera 301 used to acquire a recognition image, change detection unit 302, head detection unit 303, head trace unit 304, face candidate region detection unit 305, face region detection unit 306, face feature extraction unit 307, face recognition dictionary unit 308, face recognition unit 309, walking velocity measuring unit 310, face authentication display unit 311, face search display unit 312, gate control unit 313, and display authentication control unit 314.

Of the above-mentioned building components, the camera 301 used to acquire a recognition image, change detection unit 302, head detection unit 303, head trace unit 304, face candidate region detection unit 305, face region detection unit 306, face feature extraction unit 307, face recognition dictionary unit 308, face recognition unit 309, face authentication display unit 311, face search display unit 312, and gate control unit 313 are the same as the camera 101 used to acquire a recognition image, change detection unit 102, head detection unit 103, head trace unit 104, face candidate region detection unit 105, face region detection unit 106, face feature extraction unit 107, face recognition dictionary unit 108, face recognition unit 109, face authentication display unit 114, face search display unit 115, and gate control unit 116 in the aforementioned first embodiment (FIG. 1) and a description thereof will be omitted. Only differences from the first embodiment will be explained below.

The walking velocity measuring unit 310 measures the walking velocity (moving velocity) of the walker M. For example, the unit 310 pre-stores the relationship between the walking velocity of the walker M and the number of acquired images in the image capture target zone, and measures the approximate walking velocity of the walker M based on the number of recognition images acquired by the camera 30 used to acquire a recognition image.

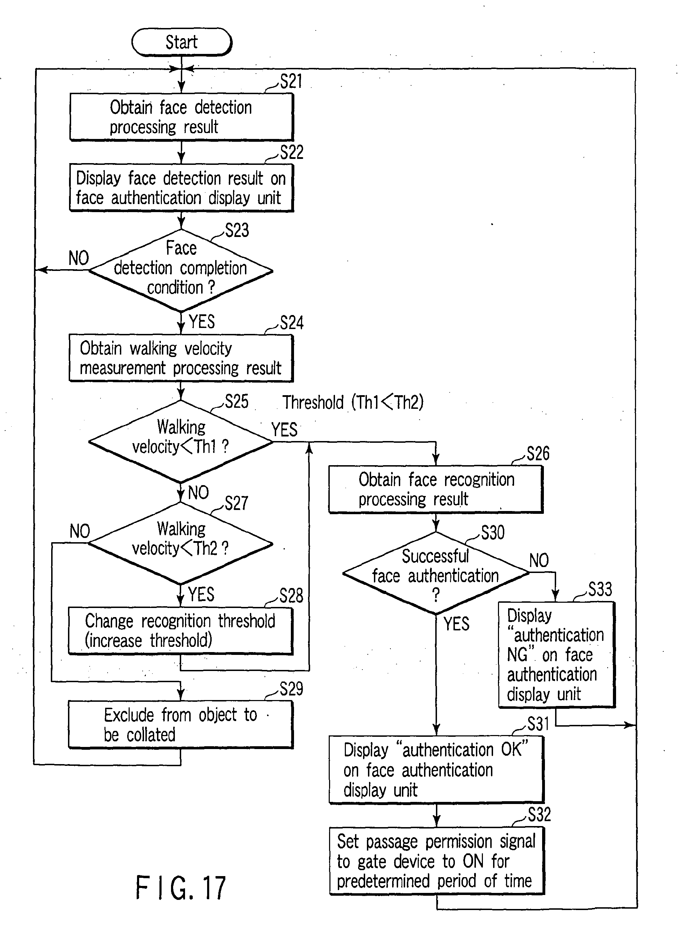

The display authentication control unit 314 controls the overall apparatus, and the flowchart of FIG. 17 shows its flow of processing. The flowchart of FIG. 17 will be explained below. Note that the control method is basically the same as the display authentication control unit 117 shown in FIG. 11.

If the walker M exists in the image capture target zone, the same face region detection processing as described above is executed (step S21), and the detection result is displayed on the face authentication display unit 311 (step S22). It is then checked if the face region detection completion condition is met (step S23). If the face region detection completion condition is not met, the flow returns to step S21 to repeat the same processing.

If the face detection completion condition is met, the walking velocity measurement result of the walker M is acquired from the walking velocity measuring unit 310 (step S24). The acquired walking velocity is compared with a threshold Th1 (step S25), and if the acquired walking velocity is less than the threshold Th1, the same face recognition processing as described above is executed (step S26).

On the other hand, if the acquired walking velocity is equal to or higher than the threshold Th1, normal face recognition processing is skipped. More specifically, if the walking velocity is equal to or higher than the threshold Th1 and is less than a threshold Th2 (Th2 > Th1) (step S27), the determination threshold in the face recognition unit 309 is changed to be higher (to set a higher security level) (step S28), and face recognition processing is executed (step S26). If the walking velocity is equal to or higher than the threshold Th2, the walker M is excluded from the object to be recognized (step S29), and the flow returns to step S21.

It is checked based on the result of the face recognition processing if authentication has succeeded (step S30). If authentication has succeeded (if it is determined that the walker M is a pre-registered person), a message indicating authentication OK is displayed on the face authentication display unit 311 (step S31), and a passage permission signal to the gate device 3 is set ON for a predetermined period of time (step S32). The flow then returns to step S21. As a result, the walker M can pass through the gate device 3.

As a result of checking in step S30, if authentication has failed (if it is determined that the walker M is not a pre-registered person), a message indicating authentication NG is displayed on the face authentication display unit 311 (step S33), and the flow returns to step S21.

As described above, according to the third embodiment, it is checked based on the walking velocity measurement result of the walker M if the walker M is likely to be an object to be captured, and the face recognition processing is executed based on this checking result, thus greatly improving the face authentication performance.

The fourth embodiment will be described below.

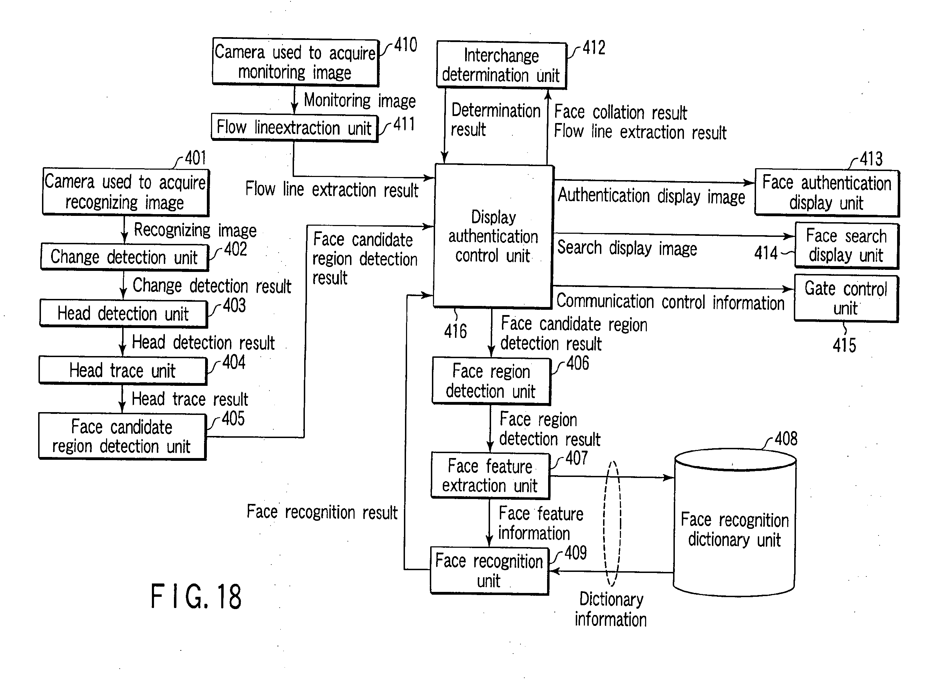

FIG. 18 schematically shows the arrangement of an entrance and exit management apparatus to which the face authentication apparatus according to the fourth embodiment is applied. This entrance and exit management apparatus comprises a camera 401 used to acquire a recognition image, change detection unit 402, head detection unit 403, head trace unit 404, face candidate region detection unit 405, face region detection unit 406, face feature extraction unit 407, face recognition dictionary unit 408, face recognition unit 409, camera 410 used to acquire a monitoring image, flow line extraction unit 411, interchange determination unit 412, face authentication display unit 413, face search display unit 414, gate control unit 415, and display authentication control unit 416.

Of these building components, the camera 401 used to acquire a recognition image, change detection unit 402, head detection unit 403, head trace unit 404, face candidate region detection unit 405, face region detection unit 406, face feature extraction unit 407, face recognition dictionary unit 408, face recognition unit 409, camera 410 used to acquire a monitoring image, flow line extraction unit 411, face authentication display unit 413, face search display unit 414, and gate control unit 415 are the same as the camera 101 used to acquire a recognition image, change detection unit 102, head detection unit 103, head trace unit 104, face candidate region detection unit 105, face region detection unit 106, face feature extraction unit 107, face recognition dictionary unit 108, face recognition unit 109, camera 110 used to acquire a monitoring image, flow line extraction unit 111, face authentication display unit 114, face search display unit 115, and gate control unit 116, and a description thereof will be omitted. Only differences from the first embodiment will be explained below.

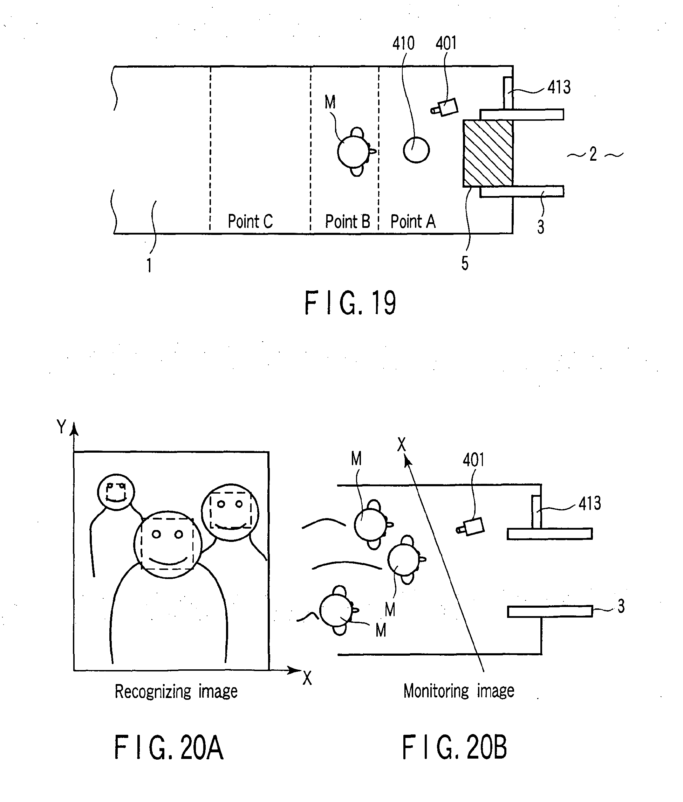

In the fourth embodiment, a zone where a person must surely pass through when he or she passes through the gate device 3 and which is near the gate device 3 is called a passer confirmation zone. More specifically, a hatched rectangular zone 5 shown in FIG. 19 indicates this zone.

The camera 410 used to acquire a monitoring image acquires an image from which the flow line in the passer confirmation zone is to be extracted, and comprises, for example, a television camera using an image sensing element such as a CCD sensor or the like. The camera 410 is set at a position to look down from the ceiling so that its field angle can cover the position of the walker M upon completion of authentication and the passer confirmation zone 5, as shown in FIG. 19. The acquired image is sent to the flow line extraction unit 411 as digital density image data of 640 pixels in the horizontal direction and 480 pixels in the vertical direction.

The interchange determination unit 412 determines interchange of walkers M using a flow line associated with the face recognition result. For this purpose, the unit 412 acquires the face recognition result and flow line extraction result from the display authentication control unit 416, and outputs its determination result to the display authentication control unit 416. Association between the recognition result and flow line is done based on the coordinate value (FIG. 20A) of a face detection region upon completion of recognition and that of the flow line (FIG. 20B). If there are a plurality of objects to be associated, they are associated based on their relative positional relationship.

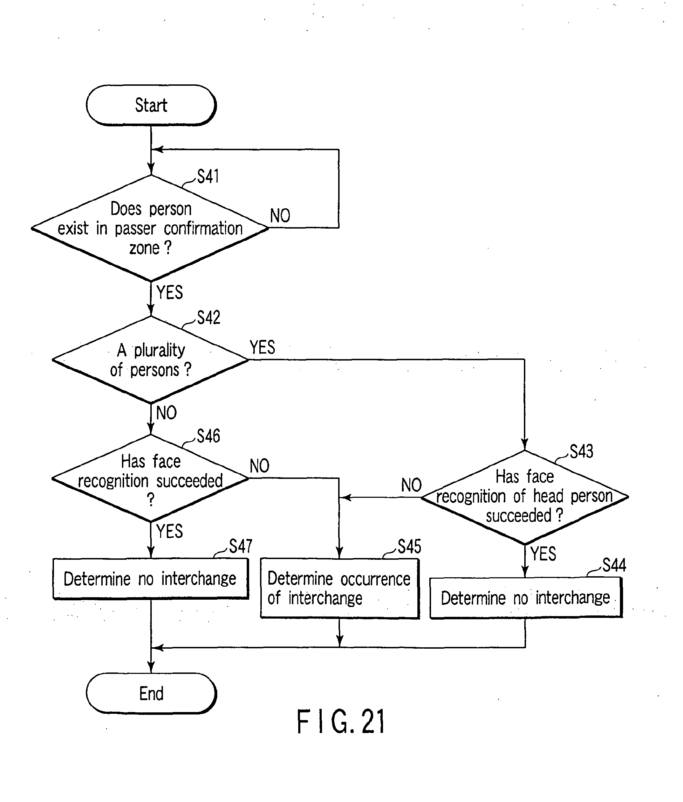

The interchange determination processing is executed according to, e.g., the flowchart shown in FIG. 21. It is confirmed if the walker M exists in the passer confirmation zone 5 (step S41). As a result of confirmation, if the walker M exists, it is confirmed if a plurality of persons exist (step S42). As a result of confirmation, if a plurality of persons exist, it is checked if recognition of a walker M at the head of these persons (closest to the gate device 3) has succeeded (step S43). As a result of confirmation, if recognition has succeeded, no interchange is determined (step S44); otherwise, if it has not succeeded, interchange of persons is determined (step S45).

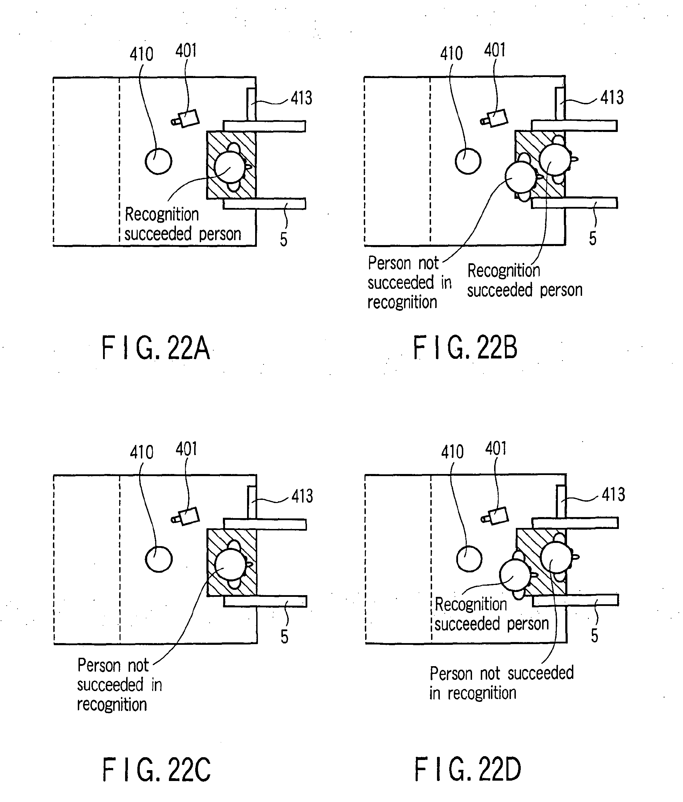

As a result of confirmation in step S42, if a plurality of persons do not exist, it is similarly confirmed if recognition has succeeded (step S46). If recognition has succeeded, no interchange is determined (step S47); otherwise, if it has not succeeded, interchange of a person is determined (step S45). This determination result is output to the display authentication control unit 416. As a practical example, FIGS. 22A and 22B show a case of no interchange, and FIGS. 22C and 22D show a case of interchange.

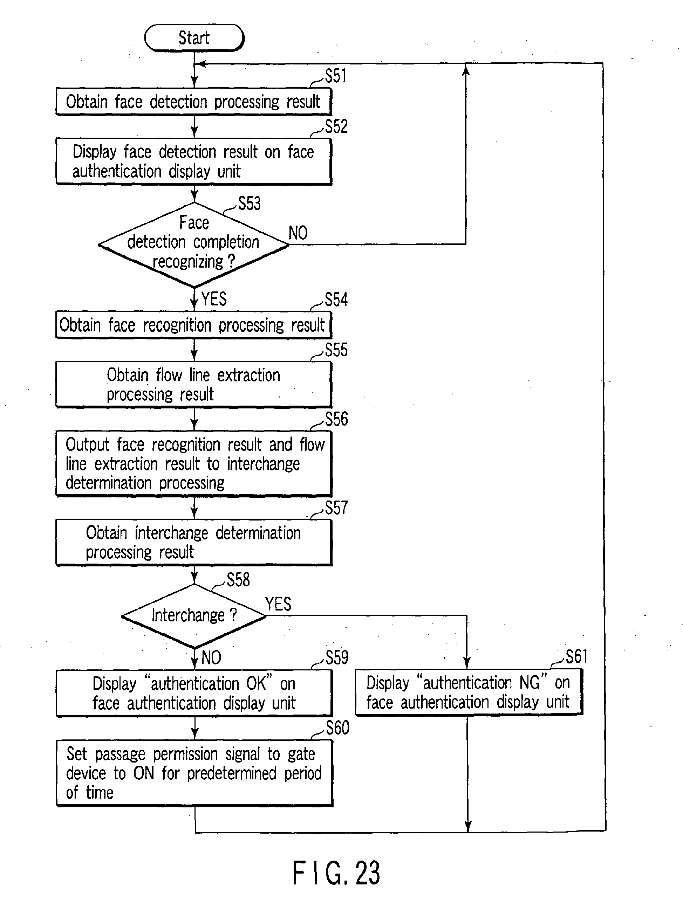

The display authentication control unit 416 controls the overall apparatus, and the flowchart of FIG. 23 shows its flow of processing. The flowchart of FIG. 23 will be explained below. Note that the control method is basically the same as the display authentication control unit 117 shown in FIG. 11.

If the walker M exists in the image capture target zone, the same face region detection processing as described above is executed (step S51), and the detection result is displayed on the face authentication display unit 413 (step S52). It is then checked if the face region detection completion condition is met (step S53). If the face region detection completion condition is not met, the flow returns to step S51 to repeat the same processing.

If the face detection completion condition is met, the same face recognition processing as described above is executed, and the result of that face recognition processing is acquired (step S54). Next, the flow line extraction result of the walker M is acquired from the flow line extraction unit 411 (step S55). The acquired face recognition processing result and flow line extraction result are sent to the interchange determination unit 412 (step S56), and the determination result is acquired from the interchange determination unit 412 (step S57).

It is checked if the determination result acquired from the interchange determination unit 412 indicates the presence/absence of interchange (step S58). If the determination result indicates no interchange, a message indicating authentication OK is displayed on the face authentication display unit 413 (step S59), and a passage permission signal to the gate device 3 is set ON for a predetermined period of time (step S60). The flow then returns to step S51. As a result, the walker M can pass through the gate device 3.

As a result of checking in step S58, if interchange is determined, a message indicating authentication NG is displayed on the face authentication display unit 413 (step S61), and the flow returns to step S51.

As described above, according to the fourth embodiment, interchange is determined using the face recognition result of the walker M and the associated flow line of the walker M, and passage control is made based on the determination result, thus preventing interchange, and greatly improving security.

The fifth embodiment will be described below.

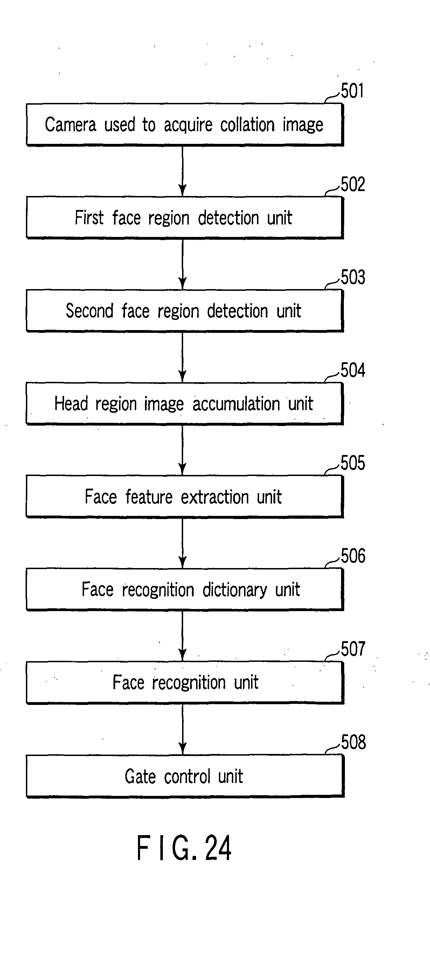

FIG. 24 schematically shows the arrangement of an entrance and exit management apparatus to which the face authentication apparatus according to the fifth embodiment is applied. This entrance and exit management apparatus comprises a camera 501 used to acquire a recognition image, first face region detection unit 502, second face region detection unit 503, face region image accumulation unit 504, face feature extraction unit 505, face recognition dictionary unit 506, face recognition unit 507, and gate control unit 508.

Of these building components, the camera 501 used to acquire a recognition image, face feature extraction unit 505, face recognition dictionary unit 506, and gate control unit 508 are the same as the camera 101 used to acquire a recognition image, face feature extraction unit 107, face recognition dictionary unit 108, and gate control unit 116 of the aforementioned first embodiment (FIG. 1), and a description thereof will be omitted.

Only differences from the first embodiment will be explained below.

The first face region detection unit 502 detects a face region candidate of the walker M from images captured by the camera 501, and can be implemented by configuring it using, e.g., the change detection unit 102, head detection unit 103, head trace unit 104, and face candidate region detection unit 105 described in the first embodiment. Hence, a description thereof will be omitted. The detected face region is sent to the second face region detection unit 503.

The second face region detection unit 503 detects a face region to be authenticated from the face region candidate detected by the first face region detection unit 502, and can be implemented by configuring it using the face region detection unit 106. Hence, a description thereof will be omitted. The detected face region is sent to the face region image accumulation unit 504.

The face region image accumulation unit 504 accumulates a plurality of images of face regions detected by the second face region detection unit 503, and accumulates images of face regions until an accumulation completion condition is met. Note that the accumulation completion condition includes a case wherein a required number of face candidate regions are acquired. In addition, the accumulation completion condition includes a case wherein the image sizes of the detected face candidate regions become equal to or larger than a predetermined value, and the like.

The face recognition unit 507 recognizes face feature information extracted by the face feature extraction unit 505 with registered face information stored in advance in the face recognition dictionary unit 506, thus determining if the walker M is a pre-registered person.

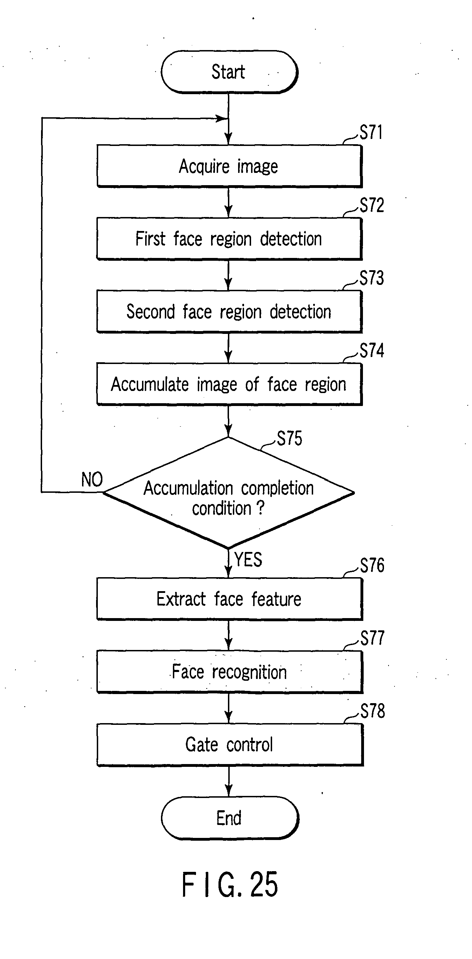

The flow of the overall processing will be described below based on the flowchart shown in FIG. 25. Note that the control method is basically the same as the display authentication control unit 117 shown in FIG. 11, and a brief explanation will be given.

An image including the face of the walker M is acquired by the camera 501 (step S71), and is sent to the first face region detection unit 502. The first face region detection unit 502 detects a candidate of the face region of the walker M from the image acquired by the camera 501 (step S72), and sends it to the second face region detection unit 503.

The second face region detection unit 503 detects a face region to be authenticated from the face region candidate detected by the first face region detection unit 502 (step S73), and sends it to the face region image accumulation unit 504. The face region image accumulation unit 504 accumulates the image of the face region detected by the second face region detection unit 503 until the accumulation completion condition is met (steps S74 and S75).

After the images of the detected face regions are accumulated until the accumulation completion condition is met, the face feature extraction unit 505 extracts feature information from each of a plurality of face region images accumulated in the face region image accumulation unit 504 (step S76), and sends the extracted feature information to the face recognition unit 507.

The face recognition unit 507 determines if the walker M of interest is a pre-registered person by recognizing extracted feature information with the registered face information stored in advance in the face recognition dictionary unit 506 (step S77), and sends the determination result to the gate control unit 508. The gate control unit 508 determines according to the determination result of the face recognition unit 507 if personal authentication is OK or NG, and controls the gate device 3 based on the OK or NG determination result of personal authentication (step S78).

As described above, according to the fifth embodiment, since the face recognition processing is done using a plurality of face region images by utilizing the first face region detection unit and second face region detection unit, a pattern variation due to a change in face direction caused by walking is absorbed, thus attaining quick face authentication of the walker with high precision.

Note that the first to fifth embodiments described above can be combined as needed. As a result, the operations and effects of respective combined embodiments can be obtained. For example, when the first embodiment is combined with the fifth embodiment, the processes in steps S71 to S78 (except for gate control) in FIG. 25 are applied as the processing in step S1 in FIG. 11. When the third embodiment is combined with the fifth embodiment, the processes in steps S71 to S78 (except for gate control) in FIG. 25 are applied as the processing in step S21 in FIG. 17. When the fourth embodiment is combined with the fifth embodiment, the processes in steps S71 to S78 (except for gate control) in FIG. 25 are applied as the processing in step S51 in FIG. 23.

The effects of the invention will be summarized below.

(1) According to the invention, there can be provided a face authentication apparatus, face authentication method, and entrance and exit management apparatus, which determine using the flow line of a walker whether or not that walker is likely to be an object to be captured, and change the determination threshold in the face recognition processing according to this determination result, thus greatly improving the face authentication performance.

(2) According to the invention, there can be provided a face authentication apparatus, face authentication method, and entrance and exit management apparatus, which determine based on the walking velocity of a walker whether or not that walker is likely to be an object to be captured, and change the determination threshold in the face recognition processing according to this determination result, thus greatly improving the face authentication performance.

(3) According to the invention, there can be provided a face authentication apparatus, face authentication method, and entrance and exit management apparatus, which determine interchange of walkers using the flow line associated with the determination result of the walker to prevent interchange, thus assuring higher security.

(4) According to the invention, there can be provided a face authentication apparatus, face authentication method, and entrance and exit management apparatus, which perform face recognition processing using a plurality of face region images by utilizing the first face detection unit and second face detection unit so as to absorb a pattern variation due to a change in face direction caused by walking, thus attaining quick face authentication of the walker with high precision.

## Claims

1. A face authentication apparatus **characterized by** comprising:

    an acquisition unit (101, 301, 401, 501) configured to acquire an image including at least a face of a moving person;
    a face detection unit (105, 106, 305, 306, 405, 406, 502, 503) configured to detect a face region candidate of the person from the image acquired by the acquisition unit, and to detect a face region from the detected face region candidate;
    a face recognition unit (109, 309, 409, 507) configured to recognize an image of the face region detected by the face detection unit and registered face information which is stored in advance; and
    an authentication unit (117, 314, 416) configured to authenticate the person based on the recognition result of the face recognition unit.

2. The apparatus according to claim 1, **characterized in that** the face recognition unit calculates similarity between the image of the detected face region and the registered face information by recognizing the image of the detected face region and the registered face information, and
   the authentication unit compares the calculated similarity with a determination threshold, and determines based on the comparison result whether or not the person is a pre-registered person.

3. The apparatus according to claim 2, which further comprises:

    a flow line extraction unit (111) configured to extract a flow line of the person;

    a comparison unit (113) configured to compare the flow line extracted by the flow line extraction unit with a reference flow line which is set in advance; and
    a determination threshold change unit (117) configured to change the determination threshold based on the comparison result of the comparison unit.

4. The apparatus according to claim 3, which further comprises:

    a reference flow line update unit (118) configured to update the reference flow line based on the flow line extracted by the flow line extraction unit when the authentication unit determines that the person is a pre-registered person.

5. The apparatus according to claim 2, which further comprises:

    a moving velocity measuring unit (310) configured to measure a moving velocity of the person; and
    a determination threshold change unit (314) configured to change the determination threshold based on the moving velocity measured by the moving velocity measuring unit.

6. The apparatus according to claim 2, which further comprises:

    a flow line extraction unit (411) configured to extract a flow line of the person; and
    an interchange determination unit (412) configured to associate the flow line extracted by the flow line extraction unit with a person determination result of the face recognition unit, and to determine interchange of persons based on the flow line associated with the person determination result.

7. The apparatus according to claim 1, **characterized in that** the face detection unit comprises:

    a first face detection unit (502) configured to detect a face region candidate of the person from the image acquired by the acquisition unit; and
    a second face detection unit (503) configured to detect a face region from the face region candidate detected by the first face detection unit, and the face recognition unit (507) recognizes a predetermined number of face region images detected by the second face detection unit with the registered face information.

8. A face authentication method **characterized by** comprising:

acquiring an image including at least a face of a moving person;

detecting a face region candidate of the person from the acquired image, and detecting a face region from the detected face region candidate;

recognizing an image of the detected face region and registered face information which is stored in advance; and

authenticating the person based on the recognition result.

9. The method according to claim 8, which further comprises:

calculating similarity between the image of the detected face region and the registered face information by recognizing the image of the detected face region and the registered face information; and

comparing the calculated similarity with a determination threshold, and determining based on the comparison result whether or not the person is a pre-registered person.

10. The method according to claim 9, which further comprises:

extracting a flow line of the person;

comparing the extracted flow line with a reference flow line which is set in advance; and

changing the determination threshold based on the comparison result.

11. The method according to claim 10, which further comprises:

updating the reference flow line based on the extracted flow line when it is determined that the person is a pre-registered person.

12. The method according to claim 9, which further comprises:

measuring a moving velocity of the person; and

changing the determination threshold based on the measured moving velocity.

13. The method according to claim 9, which further comprises:

extracting a flow line of the person; and

associating the extracted flow line with a person determination result, and determining interchange of persons based on the flow line associated with the person determination result.

14. The method according to claim 8, which further comprises:

recognizing a predetermined number of face region images obtained by detecting the face region with the registered face information.

15. An entrance and exit management apparatus **characterized by** comprising:

an acquisition unit (101, 301, 401, 501) configured to acquire an image including at least a face of a moving person;

a face detection unit (105, 106, 305, 306, 405, 406, 502, 503) configured to detect a face region candidate of the person from the image acquired by the acquisition unit, and to detect a face region from the detected face region candidate;

a face recognition unit (109, 309, 409, 507) configured to recognize an image of the face region detected by the face detection unit and registered face information which is stored in advance;

an authentication unit (117, 314, 416) configured to authenticate the person based on the recognition result of the face recognition unit; and

a gate control unit (116, 313, 415, 508) configured to control to open or close an entrance and exit gate based on the authentication result of the authentication unit.

16. The apparatus according to claim 15, **characterized in that** the face recognition unit calculates similarity between the image of the detected face region and the registered face information by recognizing the image of the detected face region and the registered face information, and

the authentication unit compares the calculated similarity with a determination threshold, and determines based on the comparison result whether or not the person is a pre-registered person.

17. The apparatus according to claim 16, which further comprises:

a flow line extraction unit (111) configured to extract a flow line of the person;

a comparison unit (113) configured to compare the flow line extracted by the flow line extraction unit with a reference flow line which is set in advance; and

a determination threshold change unit (117) configured to change the determination threshold based on the comparison result of the comparison unit.

18. The apparatus according to claim 17, which further comprises:

a reference flow line update unit (118) configured to update the reference flow line based on the flow line extracted by the flow line extraction unit when the authentication unit determines that the person is a pre-registered person.

**19.** The apparatus according to claim 16, which further comprises:

a moving velocity measuring unit (310) configured to measure a moving velocity of the person; and

a determination threshold change unit (314) configured to change the determination threshold based on the moving velocity measured by the moving velocity measuring unit.

**20.** The apparatus according to claim 15, **characterized in that** the face detection unit comprises:

a first face detection unit (502) configured to detect a face region candidate of the person from the image acquired by the acquisition unit; and a second face detection unit (503) configured to detect a face region from the face region candidate detected by the first face detection unit, and the face recognition unit (507) recognizes a predetermined number of face region images detected by the second face detection unit with the registered face information.

Camera used to acquire monitoring image 110

Monitoring image

Flow line extraction unit 111

Flow line extraction result

Flow line comparison unit 113

Reference flow line storage unit 112

Reference flow line information

Flow line comparison result

Display authentication control unit 117

Authentication display image

Face authentication display unit 114

Search display image

Face search display unit 115

Communication control information

Gate control unit 116

Camera used to acquire recognizing image 101

Recognizing image

Change detection unit 102

Change detection result

Head detection unit 103

Head detection result

Head trace unit 104

Head trace result

Face candidate region detection unit 105

Face candidate region detection result

Face region detection unit 106

Face region detection result

Face feature extraction unit 107

Face feature information

Face recognition unit 109

Dictionary information

Face recognition dictionary unit 108

Face recognition result

FIG.1

13

110

101

114

M

a

~2~

Point C | Point B | Point A

1

3

F I G. 2A

110

M

a

101

114

~2~

Point C | Point B | Point A

1

3

F I G. 2B

31

32

F I G. 3A

Authentication
OK

You may enter

F I G. 3B

Authentication
NG

Input password

F I G. 3C

Face search result

Input

Top
candidate

Second
candidates

Third
candidates

Fourth
candidates    Fifth
candidates    Sixth
candidates Seventh
candidates    Eighth
candidates    Ninth
candidates    Tenth
candidates

F I G. 4

51  52

Th

FIG.5

Time t-2  61 62    Time t-1  61 62    Time t  61 62

FIG.6

Input image · 72
Background image · 71
Background difference + binarization

Difference image at time t-1 · 74 · 73
Difference image at time t
Difference image at time t+1
Difference image at time t+2

74 — Flow line extraction result — 75 Person trace

F I G. 7

Reference flow line : L

Input flow line : I

$X_1$  $X_2$  ....  $X_k$  ....  $X_n$    F I G. 8

F I G. 9

F I G. 10

```
                    ┌─────────────┐
                    │    Start    │
                    └──────┬──────┘
                           │                                              S1
                    ┌──────▼──────────┐
                    │ Obtain face detection
                    │ processing result
                    └──────┬──────────┘
                           │                                              S2
                    ┌──────▼──────────────────┐
                    │ Display face detection result on
                    │ face authentication display unit
                    └──────┬──────────────────┘
                           │                        S3
            NO      ◇ Face detection completion ◇
           ◄─────── ◇      condition ?          ◇
                    └──────┬──────────┘
                           │ YES                    S4
                    ┌──────▼──────────┐
                    │ Obtain flow line extraction
                    │ processing result
                    └──────┬──────────┘
                           │            S5      Threshold (Th1<Th2)
                    ◇ Distance from        ◇ YES
                    ◇ reference flow       ◇─────────┐
                    ◇ line<Th1 ?           ◇
                           │ NO     S7
                    ◇ Distance from        ◇
            NO      ◇ reference flow       ◇
           ◄──────  ◇ line<Th2 ?           ◇
                           │ YES    S8
                    ┌──────▼──────────┐
                    │ Change recognition threshold
                    │ (increase threshold)
                    └──────┬──────────┘
                           │                    S9
                    ┌──────▼──────────┐
                    │ Exclude from object to
                    │ be collated
                    └─────────────────┘
```

Threshold (Th1<Th2)

Obtain face recognition processing result — S6

Successful face authentication ? — S10

Display "authentication NG" on face authentication display unit — S13

Display "authentication OK" on face authentication display unit — S11

Set passage permission signal to gate device to ON for predetermined period of time — S12

F I G. 11

FIG. 12

```
                    ( Start )
                       │
     ┌─────────────────┤
     │                 ▼
     │      Acquire recognizing image
     │                 │
     │                 ▼
     │        Detect change region
     │                 │
     │                 ▼
     │         Detect head region
     │                 │
     │                 ▼
     │            Trace head
     │                 │
     │                 ▼
     │      Detect face candidate region
     │                 │
     │                 ▼
     │              Face
  NO └─────< detection completion >
                 condition ?
                       │ YES
                       ▼
                   ( End )
```

FIG. 13

```
                    ( Start )
                       │
     ┌─────────────────┤
     │                 ▼
     │      Acquire recognizing image
     │                 │
     │                 ▼
     │      Detect face candidate region
     │                 │
     │                 ▼
     │      Trace face candidate region
     │                 │
     │                 ▼
     │              Face
  NO └─────< detection completion >
                 condition ?
                       │ YES
                       ▼
                   ( End )
```

Start

↓

Detect face region

↓

Face recognition ——— Face recognition dictionary

↓ For N persons

End

# FIG. 14

~112

Reference flow line storage unit

Updated reference flow line information

~110

Camera used to acquire monitoring image

Reference flow line information

~118

Reference flow line learning unit

Monitoring image

~111

Flow line extraction unit

Flow line extraction result

~113

Flow line comparison unit

Flow line extraction result at time of successful authentication

Flow line comparison result

~117

Display authentication control unit

# FIG. 15

Flow line extraction result

EP 1 868 158 A2

FIG. 16

```
                                    ┌─────────────┐ /310
                                    │   Walking velocity │
                                    │   measuring unit  │
                                    └─────────────┘
                        Walking velocity          /314
┌──────────────────┐/301  measurement result   ┌──────────────┐      Authentication display image   ┌──────────────────┐/311
│Camera used to acquire│ ──────────────────►    │              │ ──────────────────────────────────► │ Face authentication │
│ recognizing image  │                          │   Display    │                                     │   display unit    │
└──────────────────┘                            │authentication│                                     └──────────────────┘
          │ Recognizing image     Face candidate │control unit  │      Search display image    312 ┐  ┌──────────────┐
┌──────────────────┐/302       region detection │              │ ──────────────────────────────►   │  │ Face search  │
│ Change detection unit │         result         └──────────────┘                                    │  │ display unit │
└──────────────────┘    ──────────────────────►         │                                           └──────────────┘
          │ Change detection result                      │              Communication control information  ┌──────────┐
┌──────────────────┐/303                                 │          ──────────────────────────────────────►│Gate control│
│ Head detection unit │                                  │                                                  │   unit    │
└──────────────────┘                                     │   Face candidate region                         └──────────┘
          │ Head detection result                        ▼   detection result                                    )
┌──────────────────┐/304                          ┌──────────────┐ /306                                         313
│  Head trace unit  │                             │ Face region  │
└──────────────────┘                             │detection unit │
          │ Head trace result                     └──────────────┘
┌──────────────────┐/305                                 │ Face region
│  Face candidate   │                                    ▼ detection result
│region detection unit│                           ┌──────────────┐/307                    ┌──────────────────┐/308
└──────────────────┘                              │ Face feature │                        │                  │
                                                  │extraction unit│ ────────────────────► │  Face recognition │
                                                  └──────────────┘                        │  dictionary unit  │
                                                         │ Face feature                    │                  │
               Face recognition result                  ▼ information                      │                  │
                                                  ┌──────────────┐/309                     └──────────────────┘
                                                  │Face recognition│ ◄───────────────────────────┘
                                                  │     unit      │           Dictionary
                                                  └──────────────┘           information
```

FIG. 17

Camera used to acquire monitoring image `410`

Interchange determination unit `412`

Monitoring image

Flow lineextraction unit `411`

Determination result

Face collation result
Flow line extraction result

`401`
Camera used to acquire recognizing image

Flow line extraction result

Recognizing image

Change detection unit `402`

Face candidate region detection result

Display authentication control unit

Authentication display image

Face authentication display unit `413`

Change detection result

Search display image

`414`

Face search display unit

Head detection unit `403`

Communication control information

Gate control unit

Head detection result

`416`

Face candidate region detection result

`415`

Head trace unit `404`

Face region detection unit `406`

Head trace result

Face candidate region detection unit `405`

Face region detection result

Face feature extraction unit `407`

`408`

Face recognition result

Face recognition dictionary unit

Face feature information

Face recognition unit `409`

Dictionary information

# FIG. 18

410  401

413

M

~2~

Point C  Point B  Point A

1  5  3

F I G. 19

Y

M  X  401

413

M

M

3

X

Recognizing image  Monitoring image

F I G. 20A  F I G. 20B

Start

S41
Does person
exist in passer confirmation
zone ?
NO

YES

S42
A plurality
of persons ?
YES

NO

S46
Has face
recognition succeeded
?
NO

YES

S43
Has face
recognition of head person
succeeded ?
NO

YES

S47
Determine no interchange

S45
Determine occurrence
of interchange

S44
Determine no interchange

End

FIG. 21

410   401

413

Recognition
succeeded person

5

F I G. 22A

410   401

413

Person not
succeeded in
recognition

Recognition
succeeded person

5

F I G. 22B

410   401

413

Person not
succeeded in
recognition

5

F I G. 22C

410   401

413

Recognition
succeeded person

Person not succeeded
in recognition

5

F I G. 22D

```
                    ┌──────────┐
                    │  Start   │
                    └────┬─────┘
                         │                          S51
          ┌──────────────▼──────────────────┐
          │ Obtain face detection processing │
          │ result                           │
          └──────────────┬──────────────────┘
                         │                          S52
          ┌──────────────▼──────────────────┐
          │ Display face detection result on │
          │ face authentication display unit │
          └──────────────┬──────────────────┘
                         │                          S53
                    ┌────▼────┐
                 ┌──┤  Face   ├── NO ──┐
                 │  │detection│        │
                 │  │completion        │
                 │  │recognizing?      │
                 └──┤         ├──      │
                    └────┬────┘        │
                       │ YES           │
                         │             │          S54
          ┌──────────────▼──────────┐  │
          │ Obtain face recognition │  │
          │ processing result       │  │
          └──────────────┬──────────┘  │
                         │             │          S55
          ┌──────────────▼──────────┐  │
          │ Obtain flow line        │  │
          │ extraction processing   │  │
          │ result                  │  │
          └──────────────┬──────────┘  │
                         │             │          S56
          ┌──────────────▼──────────┐  │
          │ Output face recognition │  │
          │ result and flow line    │  │
          │ extraction result to    │  │
          │ interchange determination│ │
          │ processing              │  │
          └──────────────┬──────────┘  │
                         │             │          S57
          ┌──────────────▼──────────┐  │
          │ Obtain interchange      │  │
          │ determination processing│  │
          │ result                  │  │
          └──────────────┬──────────┘  │
                         │             │          S58
                    ┌────▼────┐        │
                 ┌──┤Interchange├ YES ─┐
                 │NO│    ?    │        │
                 │  └─────────┘        │
                 │              S59    │          S61
    ┌────────────▼─────────┐  ┌────────▼─────────┐
    │Display "authentication│  │Display           │
    │OK" on face           │  │"authentication   │
    │authentication display │  │NG" on face       │
    │unit                  │  │authentication    │
    └────────────┬─────────┘  │display unit      │
                 │     S60     └──────────────────┘
    ┌────────────▼─────────┐
    │Set passage permission│
    │signal to gate device │
    │to ON for predetermined│
    │period of time        │
    └──────────────────────┘
```

FIG. 23

```
                                                    501
┌─────────────────────────────────────────────┐
│     Camera used to acquire collation image    │
└─────────────────────────────────────────────┘
                      │
                      ▼                             502
┌─────────────────────────────────────────────┐
│          First face region detection unit     │
└─────────────────────────────────────────────┘
                      │
                      ▼                             503
┌─────────────────────────────────────────────┐
│         Second face region detection unit     │
└─────────────────────────────────────────────┘
                      │
                      ▼                             504
┌─────────────────────────────────────────────┐
│        Head region image accumulation unit    │
└─────────────────────────────────────────────┘
                      │
                      ▼                             505
┌─────────────────────────────────────────────┐
│            Face feature extraction unit       │
└─────────────────────────────────────────────┘
                      │
                      ▼                             506
┌─────────────────────────────────────────────┐
│           Face recognition dictionary unit    │
└─────────────────────────────────────────────┘
                      │
                      ▼                             507
┌─────────────────────────────────────────────┐
│              Face recognition unit            │
└─────────────────────────────────────────────┘
                      │
                      ▼                             508
┌─────────────────────────────────────────────┐
│                Gate control unit              │
└─────────────────────────────────────────────┘
```

FIG. 24

```
          ┌─────────────┐
          │    Start    │
          └──────┬──────┘
                 │
                 ▼                    ╭S71
          ┌─────────────────────┐
          │    Acquire image    │
          └──────────┬──────────┘
                     │              ╭S72
          ┌─────────────────────────┐
          │ First face region detection │
          └──────────┬──────────────┘
                     │              ╭S73
          ┌──────────────────────────┐
          │ Second face region detection │
          └──────────┬───────────────┘
                     │              ╭S74
          ┌──────────────────────────────┐
          │ Accumulate image of face region │
          └──────────┬───────────────────┘
                     │
                     ▼            ╭S75
                 ╱────────────────╲
            NO  ╱ Accumulation completion ╲
          ◄─────  condition ?            ────
                 ╲                ╱
                  ╲──────┬───────╱
                     │ YES           ╭S76
          ┌─────────────────────┐
          │  Extract face feature │
          └──────────┬──────────┘
                     │              ╭S77
          ┌─────────────────────┐
          │  Face recognition    │
          └──────────┬──────────┘
                     │              ╭S78
          ┌─────────────────────┐
          │    Gate control      │
          └──────────┬──────────┘
                     │
                     ▼
          ┌─────────────┐
          │     End     │
          └─────────────┘
```

F I G. 25

# EP 1 868 158 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001266152 A
- JP 2000331207 A
- JP 2002140699 A

### Non-patent literature cited in the description

- **NAKAI.** Detection method for moving object using post-confirmation. *IPSJ Transaction, 94-CV90,* 1994, 1-8
- **MITA ; KANEKO ; HORI.** Proposal of spatial difference probability template suitable for authentication of image including slight difference. *Lecture Papers of 9th Symposium on Sensing via Image Information, SSII03,* 2003
- **FUKUI ; YAMAGUCHI.** Face feature point extraction by combination of shape extraction and pattern recognition. *Journal of IEICE, (D,* 1997, vol. J80-D-H (8), 2170-2177
- **YAMAGUCHI ; FUKUI ; MAEDA.** Face recognition system using moving image. *IEICE Transactions PRMU97-50,* June 1997, 17-23